**Europäisches Patentamt**

**European Patent Office**

**Office européen des brevets**

(19)

(11) Veröffentlichungsnummer : **0 375 619 B1**

(12) **EUROPÄISCHE PATENTSCHRIFT**

(45) Veröffentlichungstag der Patentschrift :
**25.11.92 Patentblatt 92/48**

(21) Anmeldenummer : **89810959.0**

(22) Anmeldetag : **14.12.89**

(51) Int. Cl.⁵ : **F16B 7/04,** B62D 27/02,
E04B 1/24

(54) **Lösbare Klemmverbindung.**

(30) Priorität : **20.12.88 CH 4690/88**

(43) Veröffentlichungstag der Anmeldung :
**27.06.90 Patentblatt 90/26**

(45) Bekanntmachung des Hinweises auf die
Patenterteilung :
**25.11.92 Patentblatt 92/48**

(84) Benannte Vertragsstaaten :
**BE DE ES FR GB IT NL**

(56) Entgegenhaltungen :
**EP-A- 0 136 264**
**GB-A- 1 503 588**

(73) Patentinhaber : **ALUSUISSE-LONZA**
**SERVICES AG**
**Feldeggstrasse 4**
**CH-8034 Zürich (CH)**

(72) Erfinder : **Röllin, Ulrich**
**Am Suteracher 31**
**CH-8048 Zürich (CH)**

EP 0 375 619 B1

## Beschreibung

Die Erfindung bezieht sich auf eine lösbare Klemmverbindung zwischen einem durchlaufenden Profil mit wenigstens einer eine Längsöffnung aufweisenden, beidseits hinterschnittenen Nut in Längsrichtung und einem Anbauteil, mittels wenigstens eines, von vorn in die Nut einführbaren, mit einer Befestigungsschraube drehbaren Klemmplättchens, welche/s mit den die Hinterschneidung der Nut bildenden Profillappen in Eingriff stehen/steht, wobei beim Anziehen der Befestigungsschraube das durchlaufende Profil durch das/die Klemmplättchen teilweise verformt wird. Weiter betrifft die Erfindung ein Verfahren zum Verbinden eines durchlaufenden Profils mit einem Anbauteil.

Derartige Klemmverbindungen werden vor allem im Fahrzeug- und Hochbau verwendet. Das mit der Befestigungsschraube gedrehte und an der Innenwandung der Nut anliegende Klemmplättchen hat insbesondere auch eine Verschiebung des Anbauteils in Längsrichtung des durchlaufenden Profils zu verhindern. Es sind deshalb Lösungen gesucht worden, nach welchen der Reibschluss durch einen Formschluss ergänzt oder ersetzt wird.

Die EP-A-0136264 beschreibt eine Profilverbindung, insbesondere eine Eckverbindung von Profilstäben, bei welcher die Klemmplättchen mit einer Zahnung versehen sind. Das Klemmplättchen liegt beim Festlegen des Eckverbindungsstücks der an beiden Seiten ihres Querschnitts mit Hinterschneidungen versehenen Nut an. Durch Anziehen der Befestigungsschrauben können die Zacken des Klemmplättchens etwas in das Profilmaterial gedrückt werden. Dadurch entsteht eine Mischform zwischen einem Reib- und einem Formschluss.

Die GB-A-1503588 beschreibt eine Profilverbindung im Hochbau, wobei eine Eckverbindung eingesetzt wird. Die Nuten zur Einführung des Klemmplättchens sind im wesentlichen C-förmig ausgebildet, mit zwei auf einer Ebene liegenden ersten Flanschen und zwei rechtwinklig umgebogenen, in Richtung des Nutinnern verlaufende zweite Flansche. Die zweiten Flansche sind verformbar. Diese Verformung wird erreicht, indem das Klemmplättchen beidseits wenigstens je einen Keil und die Eckverbindung eine entsprechende Anzahl konusförmige Vertiefungen hat. Diese Lösung erfordert einen dünnwandigen und in der Materialdicke gleichbleibenden Profilquerschnitt, da sonst die notwendige Anpress- und Umformkraft nicht mit einer Schraube erzeugt werden kann. Das hier angewendete, Keil-Konusprinzip bewirkt eine punktförmige Materialverdrängung. Es ist schwer ersichtlich, wie dieses Prinzip in der Praxis funktionieren soll. Nach dem Einführen in die Längsnut müssen die Plättchen um 90° gedreht werden, sie haben in der Endstellung keine Anschlagfläche.

Der Erfinder hat sich die Aufgabe gestellt, eine Klemmverbindung der eingangs genannten Art zu schaffen, welche nicht auf dünnwandige, im Querschnitt gleichbleibende Profile eingeschränkt ist, und welche neben der Klemm- auch eine mechanische, formschlüssige Verbindung in allen drei Richtungen, also insbesondere auch in Profillängsrichtung gewährleistet und ein zusätzliches Schweissen, Schrauben, Nieten oder Bohren überflüssig macht. Weiter soll ein Verfahren zum lösbaren Verbinden der Profile geschaffen werden.

In bezug auf die Vorrichtung wird die Aufgabe erfindungsgemäss dadurch gelöst, dass die sich in Richtung der Längsöffnung der Nut in bezug auf ihren Querschnitt tendenzmässig verjüngenden Profillappen wenigstens je eine in Längsrichtung verlaufende Schwächungskerbe aufweisen, und ausserhalb dieser Schwächungskerben liegende Klemmnockennasen der Profillappen nach dem Anziehen der Befestigungsschraube im Bereich der/des im wesentlichen auf der Grundform eines Parallelepipeds basierenden, in der Nut um 30 - 60° gedrehten Klemmplättchen/s materialverformend abgebogen sind und so pro Klemmplättchen und den gleich weit von der Längsöffnung in der Nut entfernt, abgebogenen Klemmnockennasen vier mechanische Versatzungen zu einem Formschluss bilden.

Vorzugsweise sind die Klemmplättchen in der Nut um etwa 45° gedreht.

Ein wesentlicher Unterschied zur oben erwähnten GB-A-1503588 besteht darin, dass erfindungsgemäss das durchlaufende Profil weder dünnwandig noch im Querschnitt gleichbleibend ausgebildet sein muss. Weiter können dank der längslaufenden Schwächungskerben die Profillappen materialverformend abgebogen werden, statt wie nach der Entgegenhaltung nach dem Keil-Konusprinzip materialverdrängend verformt werden zu müssen. Schliesslich werden erfindungsgemäss Klemmplättchen verwendet, die nach einer Drehung von 45° an der Innenwandung der Nut anschlagen und nicht um 90° in eine durch keinen Anschlag festgelegte Position gebracht werden müssen, wobei Keile an Klemmplättchen und Vertiefungen im Anbauteil aufeinander passen müssen.

Das auf der Grundform eines Parallelepipeds basierende Klemmplättchen hat auf der Seite, welche den die Hinterschneidung bildenden Profillappen zugewandt ist, parallel zu den Kurzseiten verlaufende Klemmplättchennocken. Diese sind so angeordnet, dass sie beim Anziehen der Befestigungsschraube in eine entsprechend ausgeformte Schwächungskerbe auf der unteren Seite des Profillappens eingeführt werden. Die Auswalkkraft des auf die Wölbung der Schwächungskerbe drückenden Klemmplättchennockens bewirkt, dass das Material im Bereich der Schwächungskerbe zu fliessen beginnt, bis die Auswalkkraft ausgeglichen ist. Falls der Klemmplättchennocken im Randbereich der Schwächungskerbe aufliegt, entsteht auch eine Zugkraft.

Die Klemmplättchennocken sind vorzugsweise so hoch, wie die Schwächungskerben der unverformten Profillappen tief sind.

Jeder der beiden die Hinterschneidung bildenden Profillappen kann auf seinen Längsseiten mehr als eine längslaufende Schwächungskerbe aufweisen. Die erfindungsgemässe Wirkung wird teilweise durch die Kerbe/n und teilweise durch die Anwendung des Hebelgesetzes erzeugt. Bei gleichbleibendem Querschnitt im Bereich der Schwächungskerben wird vorerst der Bereich der am weitesten von der Nutenwandung entfernt liegenden Schwächungskerbe gebogen, dann nacheinander die näher bei der Innenwandung der Nut liegenden Bereiche einer Schwächungskerbe. Diese Reihenfolge der Biegungsvorgänge wird vorzugsweise dadurch unterstützt, dass die im Bereich der Schwächungskerben liegenden Querschnitte in von der Innenwandung der Nut wegweisender Richtung abnehmen.

Der ganze Vorgang kann unterstützt werden, indem das Anbauteil wenigstens eine vorstehende Gegenkonfiguration aufweist. Diese jeweils gegenüber einer Schwächungskerbe sich dadurch bildende Fixierung (Einspannung) des sich in Verformung befindlichen Profillappens unterstützt zusätzlich die stufenweise Verformung.

In bezug auf das Verfahren wird die Aufgabe erfindungsgemäss dadurch gelöst, dass Teile der Profillappen zur Erzeugung von Versatzungen unter Anwendung des Hebelgesetzes mittels wenigstens eines durch Anziehen einer Befestigungsschraube angedrückten Klemmplättchens materialverformend gebogen werden und einen Formschluss bilden.

Vorzugsweise wird die Befestigungsschraube des Klemmplättchens angezogen, bis die Unterseite der im Bereich der Schwächungskerben umgebogenen Klemmnockennasen auf den Auflageflächen des Klemmplättchens aufliegen. Als Klemmnockennase wird ein in bezug auf die Innenwandung der Nut ausserhalb einer Schwächungskerbe liegender Bereich des Profillappens bezeichnet.

Falls die Klemmplättchen auf der den Profillappen zugewandten Seite Klemmplättchennocken aufweist, wird die Klemmschraube vorzugsweise weiter angezogen, bis die Klemmplättchennocken das Material im Bereich der betreffenden Schwächungskerbe zum Fliessen bringen.

Weisen die Profillappen benachbart der Nutenwandung nicht oder nur unmerklich biegbare Anschlagflächen auf, wird die Befestigungsschraube vorzugsweise noch weiter angezogen, bis äussere Anschlagflächen des Klemmplättchens auf den Anschlagflächen der Profillappen flächig aufliegen und zusätzlich zum Formschluss einen Reibschluss bilden.

Beim Aneinanderliegen der beiden Anschlagflächen ist die Sicherungsposition erreicht. Durch diese Vorkehrung wird ein Abdrücken oder Ueberziehen der verformten Klemmnockennase verunmöglicht. Falls durch irgendwelche Ueberbeanspruchung bei einem Unfall oder aus anderen Gründen ein Brechen der zur Bildung eines mechanischen Formschlusses gebogenen Klemmnockennase erfolgen sollte, wirkt die nicht gebogene Klemmnase als mechanischer Puffer und kann zusammen mit dem Reibschluss der Anschlagflächen die Funktion der Klemmverbindung übernehmen.

Vor dem Eindrehen der Befestigungsschraube in das Klemmplättchen kann deren Gewinde mit einer speziellen Klebemasse überzogen werden. Dies erleichtert einerseits das Drehen des Klemmplättchens um 45° in die Anschlagposition und gewährleistet andrerseits eine bessere Vibrationssicherheit der Klemmverbindung.

Für die Herstellung des durchlaufenden Profils, der Anbauteile und der Klemmplättchen können die üblichen Konstruktionswerkstoffe verwendet werden, welche die erforderliche mechanische Festigkeit und Verformbarkeit aufweisen. Weiter erfolgt die Materialwahl unter Berücksichtigung der Abmessungen, Dimensionierung, Formgebung, Elastizität, Dehnung usw. Als Materialien sind insbesondere Aluminium und Aluminiumlegierungen, Stahl und Kunststoffe geeignet.

Mit allen Werkstoffen müssen durch materialverformende Abbiegung wenigstens vier bleibende mechanische Versatzungen pro Klemmplättchen, also Formschlüsse, erreicht werden, welche die Sicherheit der Klemmverbindung in allen drei Dimensionen, insbesondere in Längsrichtung des durchlaufenden Profils, gewährleisten.

Das Verwendungsgebiet der Erfindung liegt insbesondere im Fahrzeugbau, wie Schienen- und Strassenfahrzeuge, Schiffe, Schwebebahnen, und im Hochbau.

Beispiele für durchlaufende Profile sind Dach-, Unter- und Mittelgurten, Pfosten, Querträger, Längsträger und Dachspriegel von Fahrzeugen. Die durchlaufenden Profile können als Voll- oder Hohlprofile ausgebildet sein und in bezug auf den Querschnitt jede beliebige geometrische Form haben. Als Beispiele für Anbauteile seien Eckverbindungen, Stuhlbefestigungen, Verzurreinrichtungen und Puffersupports genannt.

Die Erfindung wird anhand der in der Zeichnung dargestellten Ausführungsbeispiele näher erläutert. Es zeigen schematisch:

- Fig. 1 eine Ansicht der Klemmverbindung, in auseinandergezogener Darstellung,
- Fig. 2 eine Teilansicht der Klemmverbindung, unmittelbar vor dem Anziehen,
- Fig. 3 eine Teilansicht der Klemmverbindung, mit Formschluss,

- Fig. 4 eine Teilansicht der Klemmverbindung, mit Form- und Reibschluss,
- Fig. 5 eine Draufsicht auf eine Klemmverbindung, mit weggelassenem Anbauteil,
- Fig. 6 einen Teilschnitt durch die Klemmnockennase und das Klemmplättchen, und
- Fig. 7 eine Teilansicht einer Klemmverbindung, in teilweise auseinandergezogener Darstellung, vor dem Anziehen.

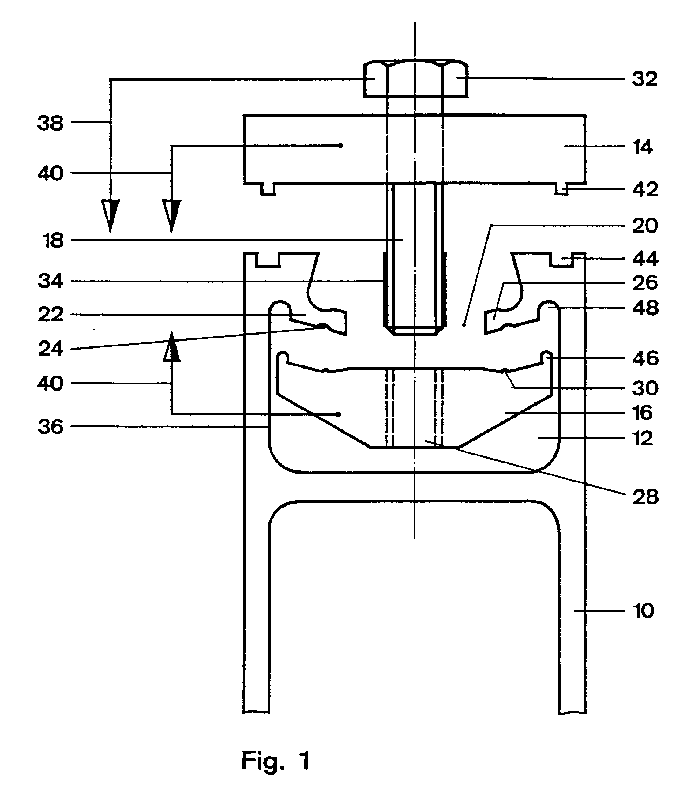

Eine einfache Variante einer Klemmverbindung ist in Fig. 1 dargestellt. Die Klemmverbindung besteht im wesenlichen aus einem durchlaufenden Profil 10 mit einer hinterschnittenen Nut 12, einem Anbauteil 14 und einem Klemmplättchen 16 mit einer Befestigungsschraube 18.

Die in Richtung des Anbauteils 14 eine Längsöffnung 20 aufweisende Nut 12 weist zwei die Hinterschneidung bildende Profillappen 22 auf. Aus der Unterseite der Profillappen ist eine längslaufende Schwächungskerbe 24 ausgespart. Der zwischen dieser Schwächungskerbe 24 und der Längsöffnung 20 liegende Teil des Profillappens 22 wird Klemmnockennase 26 genannt.

Das Anbauteil 14 ist hier als einfache Platte dargestellt, es kann jedoch z.B. auch eine Eckverbindung sein.

Das vom Anbauteil 14 her betrachtet parallelogrammförmig ausgebildete Klemmplättchen 16 weist eine Gewindebohrung 28 für die Befestigungsschraube 18 und beidseitig je einen Klemmplättchennocken 30 auf.

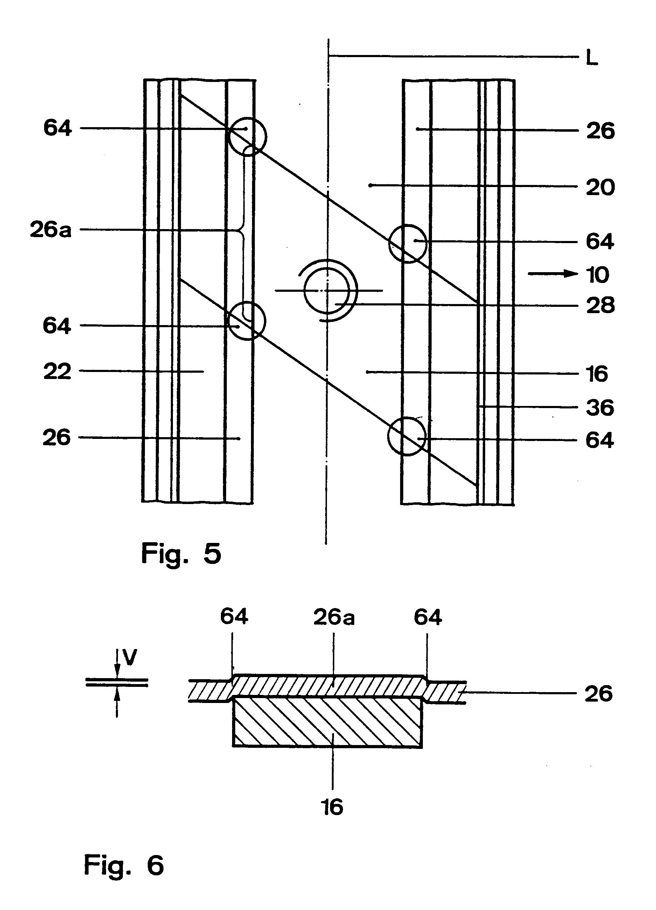

Die Befestigungsschraube 18 hat an ihrem dem Schraubenkopf 32 gegenüberliegenden Ende eine auf das Gewinde aufgetragene Klebmasse 34. Beim Herstellen der Klemmverbindung wird die Befestigungsschraube 18 nicht, wie in Fig. 1 dargestellt, in das bereits in der Nut 12 befindliche Klemmplättchen 16 eingedreht. Das bzw. die Klemmplättchen 16 werden mit das Anbauteil 14 durchgreifenden Befestigungsschrauben 18 ausserhalb der Nut 12 aufgeschraubt, in Richtung der Längsöffnung 20, entsprechend der Längsrichtung L (Fig. 5) des durchlaufenden Profils 10, ausgerichtet, durch die Längsöffnung 20 in die Nut 12 eingeführt, durch Drehen um 45° an der Innenwandung 36 der Nut 12 zum Anschlag gebracht, und dann die Befestigungsschraube 18 angezogen. Diese Montagerichtung ist mit dem Pfeil 38 angedeutet. Die Pfeile 40 zeigen die Zugrichtung an, wenn das Klemmplättchen 16 die Profillappen 22 erreicht, und die Befestigungsschrauben 18 weiter angezogen werden.

Der Anschlag 42 des Anbauteils 14 und die entsprechende Führung 44 sowie der Anschlag 46 im Klemmplättchen 16 und die entsprechende Führung 48 dienen dem Toleranzausgleich.

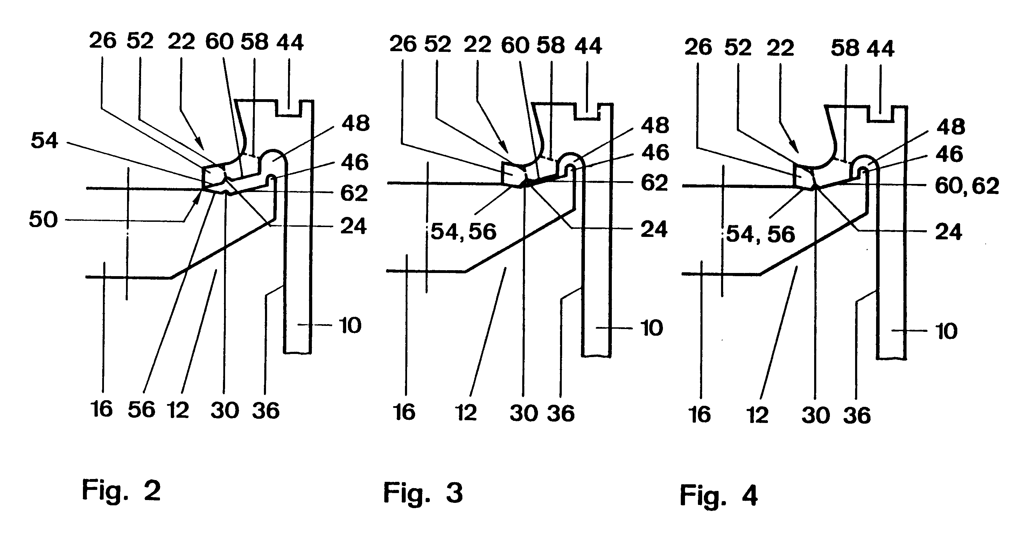

In Fig. 2 ist das Klemmplättchen 16 so weit angehoben, dass die Klemmnockennase 26 des Profillappens 22 eine linienförmige Auflage 50 bildet. Es ist von wesentlicher Bedeutung, dass die Formgebung des Klemmplättchens 16 auf die Klemmnockennase 26 abgestimmt ist.

In dieser ersten Montagestufe drückt das Klemmplättchen 16 beim Weiterdrehen der Befestigungsschraube 18 (Fig. 1) mit dem grössten Hebelarm auf die Klemmnockennase 26. Der Profillappen 22 wird im Bereich 52 der Schwächungskerbe 24 gebogen. Der Winkel zwischen der Unterseite 54 der Klemmnockennase 26 und der inneren Auflagefläche 56 des Klemmplättchens 16 beginnt sich zu schliessen, ohne dass die Unterseite 54 selbst verformt wird.

Nach Fig. 3 ist die Klemmnockennase 26 des Profillappens 22 im Bereich 52 der Schwächungskerbe 24 soweit gebogen, dass die Unterseite 54 der Klemmnockennase 26 und die innere Auflagefläche 56 des Klemmplättchens 16 aufeinander liegen.

Während des Abbiegens der Klemmnockennase 26 ist der Klemmplättchennocken 30 in die Schwächungskerbe 24 eingetreten und bewirkt eine Zug- und/oder Auswalkkraft auf die bereits angeformte Klemmnockennase 26. Nur im Bereich des Klemmplättchens 16 wird eine verbogene Klemmnockennase 26, was zu vier Versatzungen bzw. mechanischen Anschlägen für den Formschluss führt, gebildet.

Der Klemmplättchennocken 30 muss exakt an die Geometrie des Profillappens 22, insbesondere an die Lage und die Form der Schwächungskerbe 24, angepasst sein.

Im Ansatzbereich 58 des Profillappens 22 tritt keine oder keine merkliche Verbiegung auf. Die nicht biegbare Anschlagfläche 60 des Profillappens 22 und die äussere Anschlagfläche 62 des Klemmplättchens 16 liegen aneinander, jedoch ohne gegenseitige Kraftanwendung.

In Fig. 4 werden die nicht oder nur unmerklich biegbare Anschlagfläche 60 des Profillappens 22 und die äussere Anschlagfäche 62 des Klemmplättchens 16 durch Weiterdrehen der Befestigungsschraube 18 fest aufeinander gedrückt. Sie bilden einen Reibschluss, welcher den Formschluss unterstützt oder diesen notfalls ersetzt. Diese Position wird auch als Sicherheitsposition bezeichnet.

Aus Fig. 5 ist die parallelepipedförmige Grundform des Klemmplättchens 16 ersichtlich. Dieses wurde mit der Befestigungsschraube 18 (Fig. 1) gegen die Profillappen 22 gezogen, bis die in Fig. 4 dargestellte Position erreicht ist. Im Bereich des Klemmplättchens 16 ist die Klemmnockennase 26a gebogen und bildet vier mechanische Versatzungen 64.

Die Versatzungen 64 sind aus dem Schnitt von Fig. 6 ersichtlich. Die Klemmnockennase 26 ist im Bereich 26a um V versetzt und bildet einen insbesondere in Längsrichtung L (Fig. 5) des durchlaufenden Profils 10 wirksamen Formschluss.

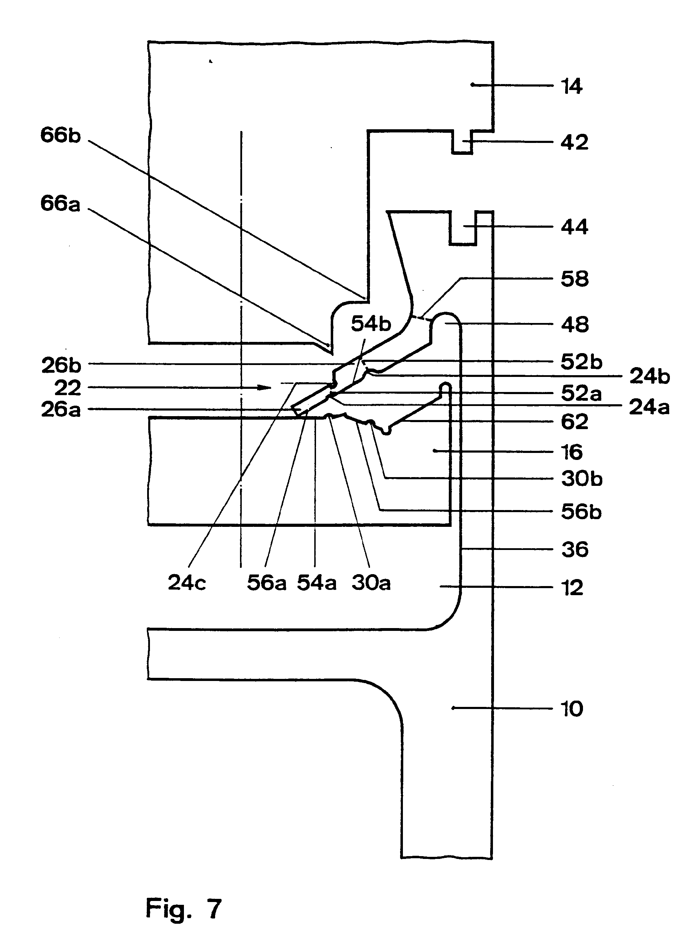

In der Ausführungsform nach Fig. 7 erfolgt das Biegen des Profillappens 22 durch das Klemmplättchen 16 und auch das Anbauteil 14.

Der Profillappen 22 ist komplizierter ausgestaltet, in dem er zwei längslaufende Schwächungskerben 24a und 24b aufweist, in welche beim Biegen die Klemmplättchennocken 30a und 30b gedrückt werden. Zwischen den Klemmnockennasen 26a und 26b ist im oberen Bereich eine weitere Schwächungskerbe 24c ausgespart. Die die Längsöffnung der Nut 12 bildende Klemmnockennase 26a ist deutlich dünner als die in Richtung der Innenwandung 36 der Nut 12 anschliessende Klemmnockennase 26b.

Im Randbereich des Anbauteils 14 sind zwei Ausformungen 66 ausgebildet, eine innere Ausformung 66a und eine versetzte äussere Ausformung 66b. Die Ausformungen 66 sind, wie die Klemmplättchennocken 30, auf die Schwächungskerben 24 des Profillappens 22 abgestimmt. Diese Ausformungen 66 dienen dazu, die Biegung des Profillappens 22 zu unterstützen.

Das Herstellen der Klemmverbindung gemäss Fig. 7 erfolgt in mehreren Stufen.

- 1. Stufe: Abbiegen der Klemmnockennase 26a mit dem Klemmplättchen 16 unter Ausnützung des grössten Hebelarms und der kleinsten Querschnittfläche im Bereich 52a der Schwächungskerbe 24a.

- 2. Stufe: Klemmplättchennocken 30a in die Schwächungskerbe 24a drücken, zur Erzeugung einer Zug- und/oder Auswalkkraft.

- 3. Stufe: Ausformung 66a des Anbauteils 14 auf den Profillappen 22 drücken.

- 4. Stufe: Neue Verformung einleiten durch gleichzeitiges Einwirken des Klemmplättchens 16 und der Ausformung 66b auf den Bereich 52b der Schwächungskerbe 24b.

- 5. Stufe: Klemmplättchennocken 30b in die Schwächungskerbe 24b drücken zur erneuten Erzeugung einer Zug- und/oder Auswalkkraft.

- 6. Stufe: Aufeinanderdrücken der nicht verformbaren Anschlagfläche 60 des Profillappens 22 und der äusseren Anschlagfläche 62 des Klemmplättchens 16 zur Erzeugung eines Reibschlusses.

Nach der dritten Stufe liegen die Unterseite 54a der Klemmnockennase 26a und die innere Auflagefläche 56a des Klemmplättchens 16 aufeinander, nach der fünften Stufe entsprechend die Unterseite 54b und die innere Auflagefläche 56b. Nach der letzten Stufe ist ein Form- und Reibschluss, auch Sicherungsposition genannt, erreicht.

Nach der Ausführungsform von Fig. 7 werden pro Plättchen acht Versatzungen hergestellt, weil beidseits je zwei Klemmnockennasen 26a, 26b gebogen werden.


**Patentansprüche**

1. Lösbare Klemmverbindung zwischen einem durchlaufenden Profil (10) mit wenigstens einer eine Längsöffnung (20) aufweisenden, beidseits hinterschnittenen Nut (12) in Längsrichtung (L) und einem Anbauteil (14), mittels wenigstens eines, von vorn in die Nut (12) einführbaren, mit einer Befestigungsschraube (18) drehbaren Klemmplättchens (16), welche/s mit den die Hinterschneidung der Nut (12) bildenden Profillappen (22) in Eingriff stehen/steht, wobei beim Anziehen der Befestigungsschraube (18) das durchlaufende Profil (10) durch das/die Klemmplättchen (16) teilweise verformt wird,
dadurch gekennzeichnet, dass
die sich in Richtung der Längsöffnung (20) der Nut (12) in bezug auf ihren Querschnitt tendenzmässig verjüngenden Profillappen (22) wenigstens je eine in Längsrichtung (L) verlaufende Schwächungskerbe (24) aufweisen, und ausserhalb dieser Schwächungskerben (24) liegende Klemmnockennasen (26) der Profillappen (22) nach dem Anziehen der Befestigungsschraube (18) im Bereich der/des im wesentlichen auf der Grundform eines Parallelepipeds basierenden, in der Nut (12) um 30 - 60° gedrehten Klemmplättchen/s (16) materialverformend abgebogen sind und so pro Klemmplättchen (16) und den gleich weit von der Längsöffnung (20) in der Nut (12) entfernt, abgebogenen Klemmnockennasen (26) vier mechanische Versatzungen (64) zu einem Formschluss bilden.

2. Klemmverbindung nach Anspruch 1, dadurch gekennzeichnet, dass das Klemmplättchen (16) auf der den Profillappen (22) zugewandten Seite wenigstens je einen parallel zu den Kurzseiten verlaufenden Klemmplättchennocken (30) hat, welche beim Anziehen der Befestigungsschraube (18) in die zugeordnete Schwächungskerbe (24) drücken und eine Zug- und/oder Auswalkkraft auf das bereits verformte Material des Profillappens (22) ausüben.

3. Klemmverbindung nach Anspruch 2, dadurch gekennzeichnet, dass die Klemmplättchennocken (30) so hoch, wie die Schwächungskerben (24) der unverformten Profillappen (22) tief sind.

4. Klemmverbindung nach einem der Ansprüche 1 - 3, dadurch gekennzeichnet, dass die Profillappen (22) im unteren, der Innenwandung (36) der Nut (12) benachbarten, nicht oder nur wenig biegbaren Bereich je eine Anschlagfläche (60) zur Bildung eines Reibschlusses mit entsprechenden Anschlagflächen (62) des Klemmplättchens (16) haben.

5. Klemmverbindung nach einem der Anspüche 1 - 4, dadurch gekennzeichnet, dass das Anbauteil (14) oberhalb wenigstens einer Schwächungskerbe (24) eine Ausformung (66a, 66b) aufweist, welche die Verformung des/der ausserhalb der Schwächungskerbe/n (24) Klemmnockennase/n (26) der Profillappen (22) unterstützt/unterstützen.

6. Klemmverbindung nach einem der Ansprüche 1 - 5, dadurch gekennzeichnet, dass bei der Ausbildung von je zwei Schwächungskerben (24a, 24b) der Querschnitt der benachbart der Längsöffnung (20) der Nut (12) liegenden Klemmnockennasen (26a) deutlich kleiner ist als derjenige der zwischen den Schwächungskerben (24a, 24b) liegenden Klemmnockennasen (26b).

7. Verfahren zum lösbaren Verbinden eines durchlaufenden Profils (10) mit einem Anbauteil (14) mittels einer Klemmverbindung nach einem der Ansprüche 1 - 6,
   dadurch gekennzeichnet, dass
   Teile der Profillappen (22) zur Erzeugung von Versatzungen (64) unter Anwendung des Hebelgesetzes mittels wenigstens eines durch Anziehen einer Befestigungsschraube (18) angedrückten Klemmplättchens (16) materialverformend gebogen werden und einen Formschluss bilden.

8. Verfahren nach Anspruch 7, dadurch gekennzeichnet, dass die Befestigungsschraube (18) des Klemmplättchens (16) angezogen wird, bis die Unterseite (54) der im Bereich der Schwächungskerben (24) umgebogenen Klemmnockennasen (26) auf den Auflageflächen (56) der/des Klemmplättchen/s (16) aufliegen.

9. Verfahren nach Anspruch 8, dadurch gekennzeichnet, dass die Befestigungschraube (18) weiter angezogen wird, bis die Klemmplättchennocken (30) das Material in den Schwächungskerben (24) zum Fliessen bringen.

10. Verfahren nach Anspruch 9, dadurch gekennzeichnet, dass die Befestigungsschraube (18) weiter angezogen wird, bis die äusseren Anschlagflächen (62) der/des Klemmplättchen/s (16) auf den nicht oder nur unmerklich biegbaren Anschlagflächen (60) der Profillappen (22) flächig aufliegen und einen Reibschluss bilden.

**Claims**

1. Releasable clamping joint between a continuous profile (10) with at least one groove (12) in the longitudinal direction (L), which groove comprises a longitudinal opening (20) and is undercut on both sides, and an attachment (14), by means of at least one clamping plate (16) which can be introduced into the groove (12) from the front and is rotatable with a fixing screw (18) and which is engaged with the profile tabs (22) forming the undercut portion of the groove (12), wherein when the fixing screw (18) is tightened, the continuous profile (10) is partially deformed by the clamping plate(s) (16), characterised in that the profile tabs (22), which taper in trend with respect to their cross-section in the direction of the longitudinal opening (20) of the groove (12), each comprise at least one weakening notch (24) extending in the longitudinal direction (L), and clamping lugs (26) of the profile tabs (22) located outside of these weakening notches (24) are bent away in such a way as to deform the material after tightening of the fixing screw (18), in the region of the clamping plate(s) (16) which are essentially based on the shape of a parallelepiped and are turned through 30-60° in the groove (12), and so, for every clamping plate (16) and the clamping lugs (26) which are bent away equally far from the longitudinal opening (20) in the groove (12), form four mechanical offsets (64) for a form-locking relationship.

2. Clamping joint according to claim 1, characterised in that the clamping plate (16) has, on the side which is facing towards the profile tabs (22), in each case one or more clamping plate projections (30) extending parallel to the short sides, which when the fixing screw (18) is tightened press into the associated weakening notch (24) and exert a tensile force and/or pressing-out force on the already deformed material of the profile tab (22).

3. Clamping joint according to claim 2, characterised in that the clamping plate projections (30) are as high as the weakening notches (24) of the undeformed profile tabs (22) are deep.

4. Clamping joint according to any of claims 1-3, characterised in that the profile tabs (22) in the lower region which is adjacent to the inner wall (36) of the groove (12) and which is not bendable or only slightly bendable each have a stop face (60) for forming a friction locking relationship with corresponding stop faces (62) of the clamping plate (16).

5. Clamping joint according to any of claims 1-4, characterised in that the attachment (14) comprises, above at least one weakening notch (24), a protuberance (66a, 66b) which assist(s) deformation of the clamping lug(s) (26) of the profile tabs (22) outside the weakening notch(es) (24).

6. Clamping joint according to any of claims 1-5, characterised in that when forming in each case two weakening notches (24a, 24b), the cross-section of the clamping lugs (26a) located adjacent to the longitudinal opening (20) of the groove (12) is clearly smaller than that of the clamping lugs (26b) located between the weakening notches (24a, 24b).

7. Method for releasably connecting a continuous profile (10) to an attachment (14) by means of a clamping joint according to any of claims 1-6, characterised in that portions of the profile tabs (22) are bent in such a way as to deform the material by means of at least one clamping plate (16) applied by tightening a fixing screw (18), to produce offsets (64), applying the lever principle, and form a form-locking relationship.

8. Method according to claim 7, characterised in that the fixing screw (18) of the clamping plate (16) is tightened until the lower side (54) of the clamping lugs (26), which are bent round in the region of the weakening notches (24), rest on the supporting surfaces (56) of the clamping plate(s) (16).

9. Method according to claim 8, characterised in that the fixing screw (18) is tightened further until the clamping plate projections (30) cause the material to creep in the weakening notches (24).

10. Method according to claim 9, characterised in that the fixing screw (18) is tightened further until the outer stop faces (62) of the clamping plate(s) (16) rest flat on the stop faces (60) of the profile tabs (22) which are not bendable or only imperceptibly bendable, and form a friction-locking relationship.

## Revendications

1. Assemblage par serrage démontable entre un profilé continu (10) comportant au moins une rainure (12) dans le sens longitudinal (L), présentant une ouverture longitudinale (20) et dépouillée bilatéralement, et une pièce rapportée (14) au moyen d'au moins une plaquette de serrage (16) insérable par l'avant dans la rainure (12), tournant à l'aide d'une vis de fixation (18), laquelle ou lesquelles plaquettes est/sont en contact avec les languettes profilées (22) constituant la contredépouille de la rainure (12), le profilé continu (10) étant déformé partiellement par la ou les plaquettes de serrage (16) lors du serrage de la vis de fixation (18), caractérisé en ce que les languettes profilées (22) dont la section transversale tend à diminuer dans la direction de l'ouverture longitudinale (20) de la rainure (12) présentent chacune au moins une encoche d'affaiblissement (24) dans la direction longitudinale (L) et que des mentonnets d'ergots de serrage (26) des languettes profilées (22) situés à l'extérieur de ces encoches d'affaiblissement (24) sont fléchis avec déformation de matière dans la zone du/des plaquettes de serrage (16) ayant sensiblement une forme reposant sur la forme fondamentale d'un parallélépipède et tournées dans la rainure (12) de 30 à 60°, après le serrage de la vis de fixation (18), et qu'ainsi quatre embrèvements mécaniques (64) par plaquette de serrage (16) et jeu de mentonnets d'ergots de serrage (26) fléchis, à égale distance de l'ouverture longitudinale (20) de la rainure (12) forment un engagement mécanique.

2. Assemblage par serrage selon la revendication 1, caractérisé en ce que la plaquette de serrage (16) possède sur la face tournée vers la languette profilée (22) au moins un ergot (30) parallèle aux petits côtés et qui s'enfonce dans l'encoche d'affaiblissement (24) correspondante lors du serrage de la vis de fixation (18) et exerce une force de traction et/ou de foulement sur la matière déjà déformée de la languette profilée (22).

3. Assemblage par serrage selon la revendication 2, caractérisé en ce que les ergots (30) de la plaquette ont une hauteur correspondant à la profondeur des encoches d'affaiblissement (24) des languettes profilées (22) non déformées.

4. Assemblage par serrage selon une des revendications 1 à 3, caractérisé en ce que les languettes profilées (22) présentent dans la zone inférieure, proche de la paroi interne (36) de la rainure (12), non flexible ou peu flexible, une surface de butée (60) en vue de la formation d'un ajustement par friction avec les surfaces de butée (62) correspondantes de la plaquette de serrage (16).

5. Assemblage par serrage selon une des revendications 1 à 4, caractérisé en ce que la pièce rapportée (14) présente au-dessus d'au moins une encoche d'affaiblissement (24) une partie déformée (66a, 66b) qui contribue à la déformation du ou des mentonnets d'ergots de serrage (26) des languettes profilées (22) à l'extérieur de la ou des encoches d'affaiblissement (24).

6. Assemblage par serrage selon une des revendications 1 à 5, caractérisé en ce que lors de la formation des deux encoches d'affaiblissement (24a, 24b) la section transversale des mentonnets d'ergots de serrage (26a) proches de l'ouverture longitudinale (20) de la rainure (12) est nettement inférieure à celle des mentonnets d'ergots de serrage (26b) situés entre les encoches d'affaiblissement (24a, 24b).

7. Procédé d'assemblage démontable d'un profilé continu (10) à une pièce rapportée (14) au moyen d'un assemblage par serrage selon une des revendications 1 à 6, caractérisé en ce que des parties des languettes profilées (22) sont fléchies avec déformation de matière en vue de la création d'embrèvements (64) par application de la loi du levier au moyen d'au moins une plaquette de serrage (16) appuyée par serrage d'une vis de fixation (18) et forment un ajustement mécanique.

8. Procédé selon la revendication 7, caractérisé en ce que la vis de fixation (18) de la plaquette de serrage (16) est serrée jusqu'à ce que la face inférieure (54) des mentonnets d'ergots de serrage (26) fléchis dans la zone des encoches d'affaiblissement (24) repose sur les surfaces d'appui (56) de la ou des plaquettes de serrage (16).

9. Procédé selon la revendication 8, caractérisé en ce qu'on poursuit le serrage de la vis de fixation (18) jusqu'à ce que l'ergot (30) de la plaquette induise le fluage de la matière dans les encoches d'affaiblissement (24).

10. Procédé selon la revendication 9, caractérisé en ce qu'on poursuit le serrage de la vis de fixation (18) jusqu'à ce que les surfaces de butée externes (62) de la ou des plaquettes de serrage (16) reposent pleinement contre les surfaces de butée (60) non flexibles ou uniquement imperceptiblement flexibles des languettes profilées (22) et forment un ajustement par friction.

Fig. 1

Fig. 2

Fig. 3

Fig. 4

10

Fig. 5

Fig. 6

Fig. 7